# EUROPÄISCHE PATENTSCHRIFT

(11) **EP 2 080 926 B1**
(45) Veröffentlichungstag und Bekanntmachung des Hinweises auf die Patenterteilung: **30.05.2012**
(21) Anmeldenummer: 08020863.0
(22) Anmeldetag: 02.12.2008
(51) Int. Cl.: F16F 1/38

(54) **Buchse mit Anschlägen**
Bushing with stops
Manchon avec des butées

(30) Priorität: 15.01.2008 DE 102008004553
(43) Veröffentlichungstag der Anmeldung: 22.07.2009
(73) Patentinhaber: Carl Freudenberg KG, 69469 Weinheim (DE)
(72) Erfinder: Ebert, Michael, 13055 Berlin (DE); Hinze, Andreas, 14621 Schönwalde-Glien (DE); Erl, Andreas, 16761 Hennigsdorf (DE)

(56) Entgegenhaltungen:
- EP-A- 0 242 254
- GB-A- 1 545 843
- GB-A- 2 317 938

## Beschreibung

### Technisches Gebiet

Die Erfindung betrifft eine Buchse gemäß dem Oberbegriff des Patentanspruchs 1.

### Stand der Technik

Aus der gattungsbildenden GB 1 545 843 A ist eine Buchse bekannt, bei welcher elastische Verbindungslagen zwischen sich einen Hohlraum ausbilden, in welchem ein Anschlag positioniert ist. Die GB 2 317 938 A zeigt eine Buchse, bei welcher am Hüllkörper ein Anschlag anliegt, der sich radial nach innen erstreckt. Die EP 0 242 254 A1 offenbart eine Buchse mit Taschen, in denen eine Flüssigkeit aufgenommen ist.

Buchsen weitere sind aus der EP 1 736 681 A1 bereits bekannt. Bei den bekannten Buchsen besteht der Kemkörper aus einem Rohr, welches von einem Rohr größeren Innendurchmessers konzentrisch umgeben ist. Die beiden Rohre sind durch eine Gummilage miteinander verbunden, wobei die Gummilage an die Rohre anvulkanisiert ist.

Die bekannten Buchsen werden als Lagerelemente in Kraftfahrzeugen aller Art verwendet. Die bekannten Buchsen weisen in radialer Belastungsrichtung, nämlich wenn das innere Rohr gegen das äußere Rohr verschoben wird, ein rotationssymmetrisches Steifigkeitsverhalten auf. Das Steifigkeitsverhalten ist quasi in der Buchse nach deren Herstellung eingefroren.

In der Praxis ist es jedoch häufig notwendig, das Steifigkeitsverhalten der Buchse in Abhängigkeit von der Auslenkung des Kemkörpers zum Hüllkörper einzustellen. Es ist beispielsweise wünschenswert, dass die Rückstellkrafk, welche versucht, den Kemkörper und den Hüllkörper in ihre Ruhelage bzw. Ausgangsstellung zu verbringen, in Abhängigkeit von der Auslenkung variiert.

### Darstellung der Erfindung

Der Erfindung liegt daher die Aufgabe zugrunde, eine Buchse der eingangs genannten Art derart auszugestalten und weiterzubilden, dass diese nach kostengünstiger Fertigung ein von der Auslenkung des Kemkörpers zum Hüllkörper abhängiges, einstellbares Steifigkeitsverhalten aufweist.

Erfindungsgemäß wird die voranstehende Aufgabe mit den Merkmalen des Patentanspruchs 1 gelöst.

Danach ist eine Buchse der eingangs genannten Art dadurch gekennzeichnet, dass der Kernkörper mehrteilig aufgebaut ist, wobei der Kernkörper aus einer Aufnahmehülse besteht, in welcher mindestens ein Einschubkörper aufgenommen ist oder auf welcher mindestens ein Aufsteckkörper angeordnet ist, wobei der Einschubkörper oder der Aufsteckkörper die Aufnahmehülse an einem axialen Ende übergreift und stirnseitig an dieser anliegt, oder wobei der Hüllkörper mehrteilig aufgebaut ist, wobei der Hüllkörper mindestens einen Aufsteckkörper mit einem Anschlag aufweist und wobei der Aufsteckkörper eine Außenhülse an einem axialen Ende übergreift und stirnseitig an dieser anliegt.

Erfindungsgemäß ist erkannt worden, dass mindestens ein baulich von der elastischen Verbindungslage getrennter, einsetzbarer Anschlag erlaubt, der Buchse unterschiedliche Steifigkeitsverhalten aufzuprägen. Ganz konkret ist erkannt worden, dass ein von der Verbindungslage getrennter oder getrennt hergestellter Anschlag nach der Anordnung der Verbindungslage, beispielsweise durch Vulkanisation, in die Buchse eingefügt werden kann. Dieser Anschlag kann materialunabhängig von der Verbindungslage ausgewählt werden. Der als separates Teil einsetzbare Anschlag kann erfindungsgemäß unterschiedliche Rückstellkräfte bei einem unterschiedlichen Maß der Auslenkung bewirken. Der Anschlag kann unabhängig von der Verbindungslage modifiziert werden. Hierdurch ist eine variabel einstellbare Buchse geschaffen, welche an eine Vielzahl von Anwendungen im Hinblick auf ihr Steifigkeitsverhalten anpassbar ist.

Vor diesem Hintergrund weist die elastische Verbindungslage Aussparungen zur Aufnahme des Anschlags auf, wobei die Aussparungen eine relative Bewegung über eine freie Wegstrecke oder einen freien Winkel erlauben. Die Aussparungen bewirken, dass über eine freie Wegstrecke oder einen freien Winkel ein Bewegungswiderstand wirkt, der ausschließlich durch die elastische Verbindungslage bestimmt wird. Ein freier Winkel tritt dann auf, wenn der Kernkörper gegen den Hüllkörper verdreht wird. Bei einer solchen Verdrehung wird die elastische Verbindungslage tordiert und wirkt mit einer Rückstellkraft in Form eines Drehmoments der Verdrehung entgegen.

Der Kernkörper kann mehrteilig aufgebaut sein. Durch diese konkrete Ausgestaltung ist es möglich, den Kernkörper zu stabilisieren. Des Weiteren ist möglich, die axiale Erstreckung des Kernkörpers durch Hinzufügen von Einschubkörpern oder Aufsteckkörpern zu erhöhen.

Der Kemkörper kann aus einer Aufnahmehülse bestehen, in welcher mindestens ein Einschubkörper aufgenommen ist. Des Weiteren ist denkbar, dass In die Aufnahmehülse beidseitig jeweils ein Einschubkörper eingeschoben ist. Hierdurch kann die axiale Erstreckung des Kernkörpers gegenüber dem Hüllkörper vergrößert werden. Die Einschubkörper können in die Aufnahmehülse eingeklebt sein. Des Weiteren ist denkbar, dass die Einschubkörper durch Presspassung in der Aufnahmehülse aufgenommen sind.

Der Kernkörper kann aus einer Aufnahmehülse bestehen, auf welcher mindestens ein Aufsteckkörper angeordnet ist. Durch diese konkrete Ausgestaltung ist eine Stabilisierung des Randbereichs der Aufnahmehülse gegen Deformierung möglich. Die Aufsteckkörper können den Randbereich der Aufnahmehülse erheblich verstärken.

Der Hüllkörper kann mehrteilig aufgebaut sein. Hierdurch kann der Hüllkörper modular mit Anschlägen versehen werden, um die Steifigkeitskennlinien der Buchse zu modifizieren.

Der Hüllkörper kann mindestens einen Aufsteckkörper mit einem Anschlag aufweisen. Hierdurch könnte die axiale Erstreckung des Hüllkörpers erhöht werden. Des Weiteren kann der Hüllkörper gegen Deformierungen verstärkt werden.

Mindestens ein Einschubkörper oder ein Aufsteckkörper übergreift die Aufnahmehülse oder die Außenhülse an einem axialen Ende und liegt stirnseitig an dieser an. Hierdurch können Kraftkomponenten auf die Stirnseite der Außenhülse oder der Aufnahmehülse geleitet werden. Des Weiteren wird eine stabile Endlage des Einschubkörpers oder des Aufsteckkörpers bewirkt.

Folglich ist die eingangs genannte Aufgabe gelöst.

Der Kemkörper oder der Hüllkörper könnte über die freie Wegstrecke oder den freien Winkel gegen eine erste Rückstellkraft bewegbar sein. Durch diese konkrete Ausgestaltung ist sichergestellt, dass der Buchse mindestens zwei Kennlinien aufgeprägt werden können. Dabei wird die erste Kennlinie durch eine erste Steifigkeit und eine zweite Kennlinie durch eine zweite Steifigkeit charakterisiert, welche nach Anlage des Kemkörpers oder Hüllkörpers an einem der Anschläge zum Tragen kommt.

Vor diesem Hintergrund könnte der Kemkörper oder der Hüllkörper nach Anlage an dem Anschlag über eine Bremsstrecke oder einen Bremswinkel gegen einen zweiten Bewegungswiderstand bewegbar sein. Hierdurch ist eine Buchse mit mindestens zwei Kennlinien erzeugbar.

Der Anschlag könnte als elastischer Körper ausgebildet sein. Vor diesem Hintergrund ist denkbar, dass der Anschlag als Gummi oder Elastomer ausgestaltet ist. Gummis und Elastomere lassen sich problemlos strukturieren, um Kennlinien von Steifigkeiten in Übergangsbereichen zu glätten. Elastomere lassen sich problemlos an metallische Gegenstände anvulkanisieren. Die Ausgestaltung des Anschlags als elastischer Körper erlaubt eine Einstellung der zweiten Rückstellkraft bzw. der zweiten Kennlinie der Steifigkeit der Buchse.

Die elastische Verbindungslage könnte Ausnehmungen zur Modifizierung der radialen und/ oder axialen Steifigkeit der Buchse aufweisen. Vor diesem Hintergrund ist denkbar, dass in der elastischen Verbindungslage Hohlräume jeglicher geometrischer Form ausgestaltet sind, welche die Steifigkeit der Buchse in mindestens einer Raumrichtung erniedrigen oder verändem.

Der Einschubkörper könnte einen Übergriff aufweisen, der an einem Öffnungsrand der Aufnahmehülse anliegt. Hierdurch ist eine unverrückbare Anlage des Einschubkörpers sichergestellt.

Am Einschubkörper könnte ein Anschlag angeordnet sein. Durch diese konkrete Ausgestaltung ist es möglich, Anschläge vorzusehen, die ein anderes Steifigkeitsverhalten zeigen als die elastische Verbindungslage. Ganz in Abhängigkeit von der Anwendung der Buchse können Einschubkörper mit Anschlägen verschiedener Steifigkeitskennlinien eingefügt werden. Insoweit ist die Buchse an verschiedene Anwendungsgebiete problemlos und modular anpassbar.

Der Aufsteckkörper könnte auf einem Absatz der Aufnahmehülse angeordnet sein und einen Anschlag aufweisen. Durch diese konkrete Ausgestaltung ist eine unverrückbare Aufnahme des Aufsteckkörpers realisierbar. Des Weiteren ist ein modularer Aufbau der Buchse im Hinblick auf deren Steifigkeitsverhalten denkbar, wenn nämlich Aufsteckkörper mit Anschlägen unterschiedlicher Elastizität auf die Aufnahmehülse aufgesteckt werden.

Vor diesem Hintergund könnte der Hüllkörper mindestens einen Einschubkörper mit einem Anschlag aufweisen. Hierdurch kann der Hüllkörper gegen Deformierungen verstärkt werden.

Der Kemkörper könnte exzentrisch zum Hüllkörper angeordnet sein. Eine solche Buchse weist in einer Radialrichtung einen größeren Freiweg auf als in einer anderen. Durch die Schaffung kleinerer Freiwege in einer Radialrichtung kann die Buchse an enge Bauraumsituationen angepasst werden.

Es gibt nun verschiedene Möglichkeiten, die Lehre der vorliegenden Erfindung auf vorteilhafte Weise auszugestalten und weiterzubilden. Dazu ist einerseits auf die nachgeordneten Ansprüche, andererseits auf die nachfolgende Erläuterung bevorzugter Ausführungsbeispiele der erfindungsgemäßen Buchse anhand der Zeichnung zu verweisen.

In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: eine nicht erfindungsgemäβe Buchse mit einem Kemkörper und einem Hüllkörper, wobei dem Hüllkörper Anschläge zugeordnet sind,
- Fig. 2: eine erfindungsgemäβe Buchse mit einem mehrteiligen Kernkörper, in welchen Einschubkörper eingefügt sind,
- Fig. 3: eine nicht erfindungsgemäβe Buchse mit einem mehrteiligen Kemkörper, auf welchen Aufsteckkörper aufgesetzt sind,
- Fig. 4: eine nicht erfindungsgemäβe Buchse mit einer elastischen Verbindungslage, welche abgerundete Ecken aufweist,
- Fig. 5: eine erfindungsgemäβe Buchse mit einer elastischen Verbindungslage, in weicher ein Versteifungselement aufgenommen ist,
- Fig. 6: eine nicht erfindungsgemäβe Buchse, bei welcher die Anschläge wechselseitig an Hüllkörper und Kemkörper angeordnet sind,
- Fig. 7: eine nicht erfindungsgemäβe Buchse, bei welcher die elastische Verbindungslage abgerundete Ecken aufweist und die Anschläge dem Kemkörper zugeordnet sind,
- Fig. 8: eine nicht erfindungsgemäβe Buchse, bei welcher die Anschläge wechselseitig dem Hüllkörper und dem Kernkörper zugeordnet sind und die elastische Verbindungslage abgeschrägte Bereiche aufweist, und
- Fig. 9: eine nicht erfindungsgemäβe Buchse, bei welcher der Kemkörper relativ zum Hüllkörper exzentrisch angeordnet ist.

### Ausführung der Erfindung

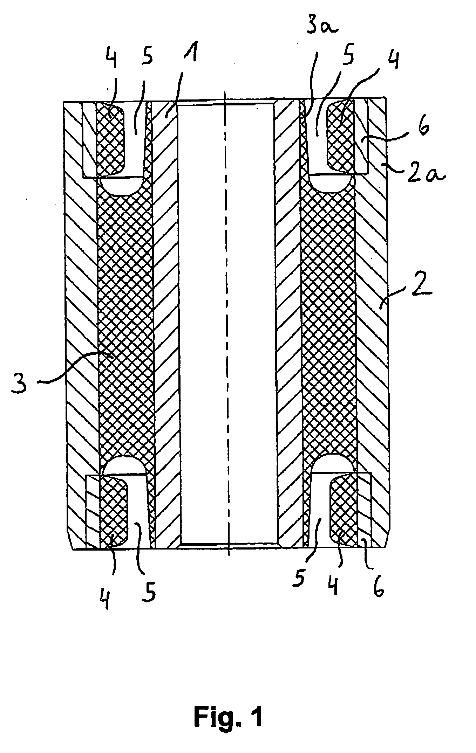

Fig. 1 zeigt eine Buchse mit einem Kemkörper 1 und einem diesen umgebenden Hüllkörper 2. Eine elastische Verbindungslage 3 verbindet den Hüllkörper 2 und den Kernkörper 1 miteinander. Des Weiteren beabstandet die elastische Verbindungslage 3 den Hüllkörper 2 vom Kemkörper 1. Der Kemkörper 1 ist relativ zum Hüllkörper bewegbar. Dem Hüllkörper 2 ist mindestens ein Anschlag 4 zugeordnet, welcher die relative Bewegung des Kemkörpers zum Hüllkörper 2 begrenzt. Dem Hüllkörper 2 ist mindestens ein baulich von der Verbindungslage 3 getrennter oder ein von der Verbindungslage 3 getrennt hergestellter Anschlag 4 zugeordnet.

Die elastische Verbindungslage 3 weist Aussparungen 5 auf, die der Aufnahme der Anschläge 4 dienen. Die Aussparungen 5 erlauben eine relative Bewegung des Kemkörpers 1 zum Hüllkörper 2 über eine freie Wegstrecke oder einen freien Winkel.

Der Kemkörper 1 oder der Hüllkörper 2 sind über die freie Wegstrecke oder den freien Winkel gegen eine erste Rückstellkraft bzw. einen ersten Bewegungswiderstand bewegbar. Die erste Rückstellkraft wird durch die Steifigkeit der elastischen Verbindungslage 3 bestimmt. Der Kemkörper 1 ist nach Anlage an dem Anschlag 4 über eine Bremsstrecke oder einen Bremswinkel gegen eine zweite Rückstellkraft bzw. einen zweiten Bewegungswiderstand bewegbar, welcher durch die Steifigkeit der Anschläge 4 bestimmt wird. Der Anschlag 4 ist als elastischer Körper ausgebildet.

Der Hüllkörper 2 ist mehrteilig ausgebildet. Ganz konkret weist der Hüllkörper 2 Einschubkörper 6 auf, die in Öffnungen einer zylindrisch ausgebildeten Außenhülse 2a eingeschoben sind. Den Einschubkörpern 6 sind die Anschläge 4 zugeordnet. Sowohl die Anschläge 4 als auch die elastische Verbindungslage 3 sind durch Vulkanisation mit dem Kernkörper 1, dem Hüllkörper 2 bzw. den Einschubkörpern 6 verbunden. Die Einschubkörper 6 sind als Ringe ausgestaltet. Aus Fig. 1 ist erkennbar, dass die elastische Verbindungslage 3 Auslaufflanken 3a aufweist, gegen welche die Anschläge 4 zur Anlage kommen können.

Obwohl dies in Fig. 1 nicht gezeigt ist, können die Einschubkörper 6 erfindungsgemäβ derart ausgestaltet sein, dass sie die Außenhülse 2a stimseitig, das heißt an ihren axialen Enden, übergreifen. Durch das Übergreifen können die Einschubkörper 6 axial an der Außenhülse 2a anliegen, um eine sichere Endlage zu erreichen. Des Weiteren kann in einem solchen Fall die Dicke der Außenhülse 2a an ihren axialen Enden nur wenig geschwächt werden, da die größten Kraftkomponenten auf die axial endseitige Stirnfläche der Außenhülse 2a geleitet werden können.

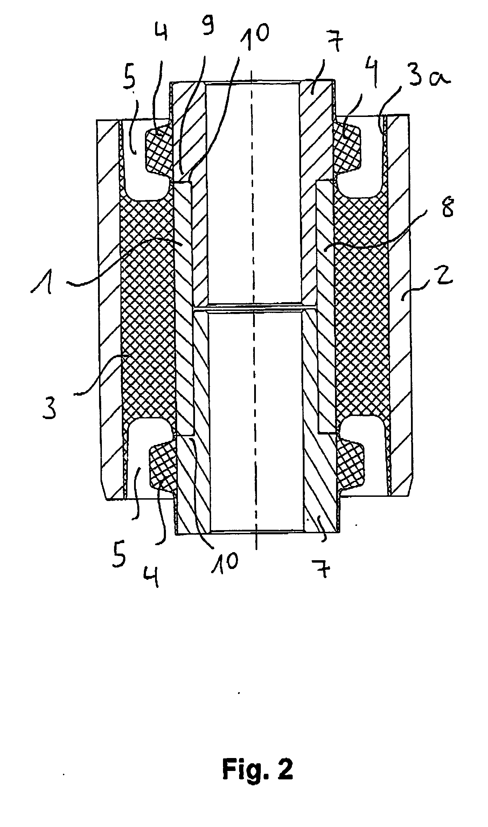

Fig. 2 zeigt eine Buchse mit einem mehrteiligen Kemkörper 1, der Einschubkörper 7 aufweist. Den Einschubkörpern 7 sind Anschläge 4 zugeordnet. Der Hüllkörper 2 ist einteilig ausgebildet. Der Hüllkörper 2 und der Kernkörper 1 sind durch eine elastische Verbindungslage 3 miteinander verbunden. Die elastische Verbindungslage 3 weist Aussparungen 5 auf, die der Aufnahme der Anschläge 4 dienen. Der Kemkörper 1 weist eine Aufnahmehülse 8 auf, in welche die Einschubkörper 7 eingeschoben sind. Die Einschubkörper 7 sind jeweils an den Öffnungen der zylindrisch ausgebildeten Aufnahmehülse 8 eingeschoben. Die Einschubkörper 7 weisen Übergriffe 9 auf, welche an einem Öffnungsrand 10 der Aufnahmehülse 8 zur Anlage kommen. An den Einschubkörpern 7 sind Anschläge 4 angeordnet, die als elastische Körper ausgebildet sind.

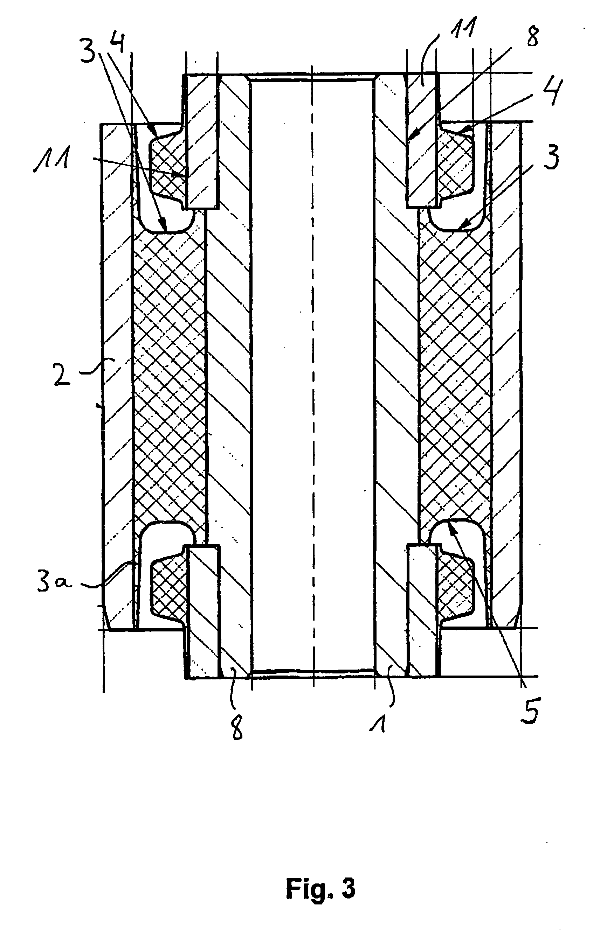

Fig. 3 zeigt eine Buchse mit einem mehrteiligen Kemkörper 1, welcher Aufsteckkörper 11 mit Anschlägen 4 aufweist. Der Kernkörper 1 weist eine zylindrische Aufnahmehülse 8 auf, die von ringförmig ausgestalteten Aufsteckkörpern 11 umgeben wird. Der Hüllkörper 2 ist mit dem Kemkörper 1 durch eine elastische Verbindungslage 3 verbunden, welche Aussparungen 5 zur Aufnahme der Anschläge 4 aufweist. Obwohl dies in Fig. 3 nicht gezeigt ist, können die Aufsteckkörper 11 erfindungsgemäβ derart ausgestaltet sein, dass sie die Aufnahmehülse 8 stimseitig, das heißt an ihren axialen Enden, übergreifen. Durch das Übergreifen können die Aufsteckkörper 11 axial an der Aufnahmehülse 8 anliegen, um eine sichere Endlage zu erreichen. Des Weiteren kann in einem solchen Fall die Dicke der Aufnahmehülse 8 an ihren axialen Enden nur wenig geschwächt werden, da die größten Kraftkomponenten auf die axial endseitige Stimfläche der Aufnahmehülse 8 geleitet werden können.

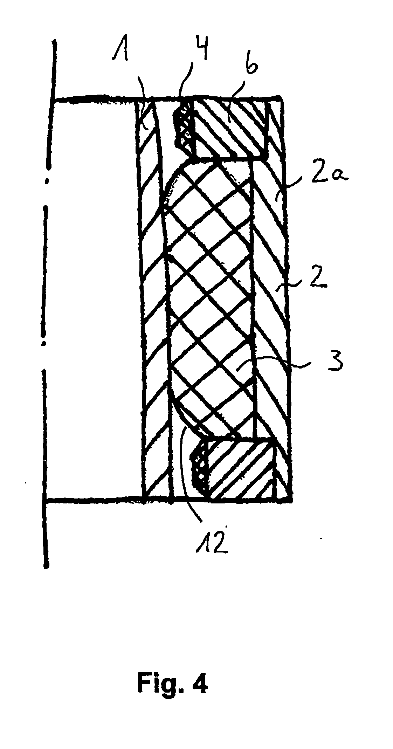

Fig. 4 zeigt eine Buchse mit einem Kernkörper 1 und einem Hüllkörper 2, wobei der Hüllkörper 2 mehrteilig ausgebildet ist Der Hüllkörper 2 weist Einschubkörper 6 auf, an welchen Anschläge 4 angeordnet sind. Der Kernkörper 1 ist mit dem.Hüllkörper 2 durch eine elastische Verbindungslage 3 verbunden, welche abgerundete Eckbereiche 12 aufweist.

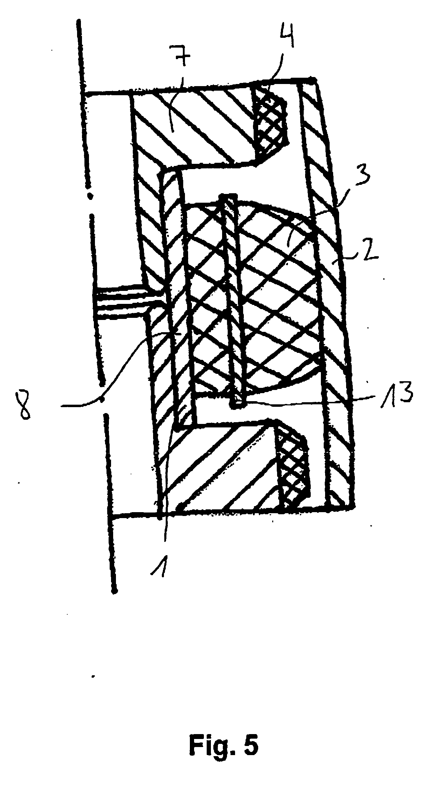

Fig. 5 zeigt eine Buchse, bei welcher der Hüllkörper 2 mit dem Kemkörper 1 über eine elastische Verbindungslage 3 verbunden ist, in welcher ein Versteifungselement 13 angeordnet ist. Des Weiteren zeigt Fig. 5 eine Aufnahmehülse 8, in welcher Einschubkörper 7 mit Anschlägen 4 angeordnet sind. Das Versteifungselement 13 ist ringförmig ausgebildet und modifiziert die Steifigkeit der Verbindungslage 3, in welche es eingebettet ist.

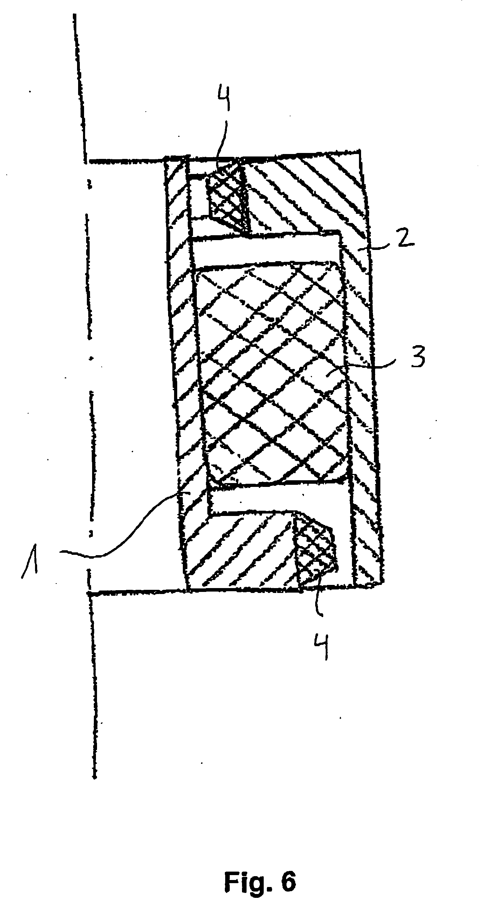

Fig. 6 zeigt eine Buchse mit einem Hüllkörper 2 und einem Kemkörper 1, die durch eine elastische Verbindungslage 3 miteinander verbunden sind. In der Buchse gemäß Fig. 6 sind die Anschläge 4 wechselseitig sowohl am Hüllkörper 2 als auch am Kemkörper 1 angeordnet.

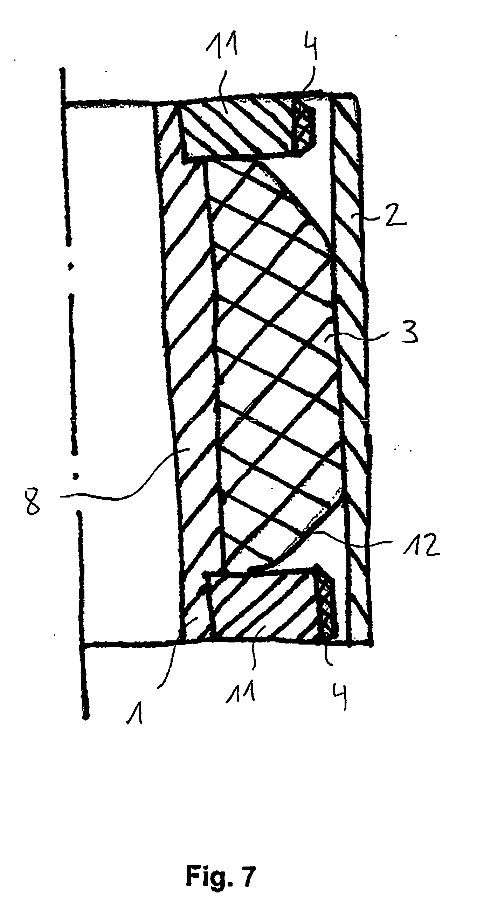

Fig. 7 zeigt eine Buchse mit einem Hüllkörper 2 und einem Kernkörper 1, die mit einer elastischen Verbindungslage 3 verbunden sind. Die elastische Verbindungslage 3 weist abgerundete Eckbereiche 12 auf. Der Kemkörper 1 weist eine Aufnahmehülse 8 auf, auf welcher Aufsteckkörper 11 mit Anschlägen 4 aufgesteckt sind.

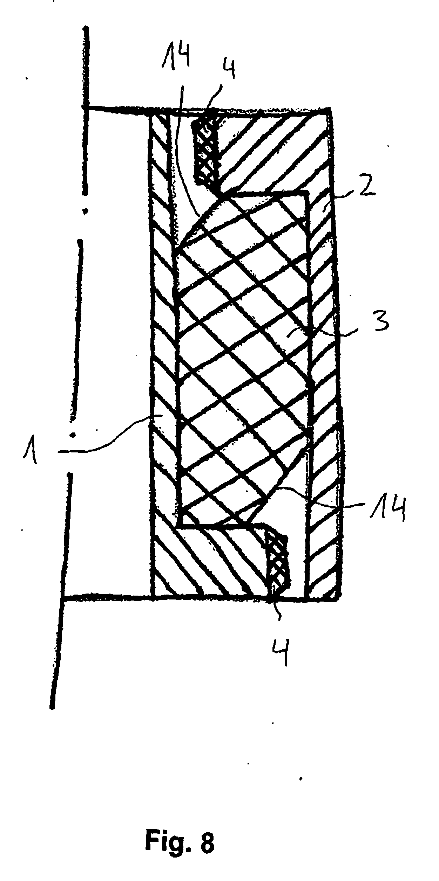

Fig. 8 zeigt eine Buchse mit einem Hüllkörper 2 und einem Kemkörper 1, die mit einer elastischen Verbindungstege 3 verbunden sind. Die elastische Verbindungslage 3 weist Abschrägungen 14 auf. Die Buchse gemäß Fig. 8 zeigt Anschläge 4, die wechselseitig dem Kernkörper 1 und dem Hüllkörper 2 zugeordnet sind.

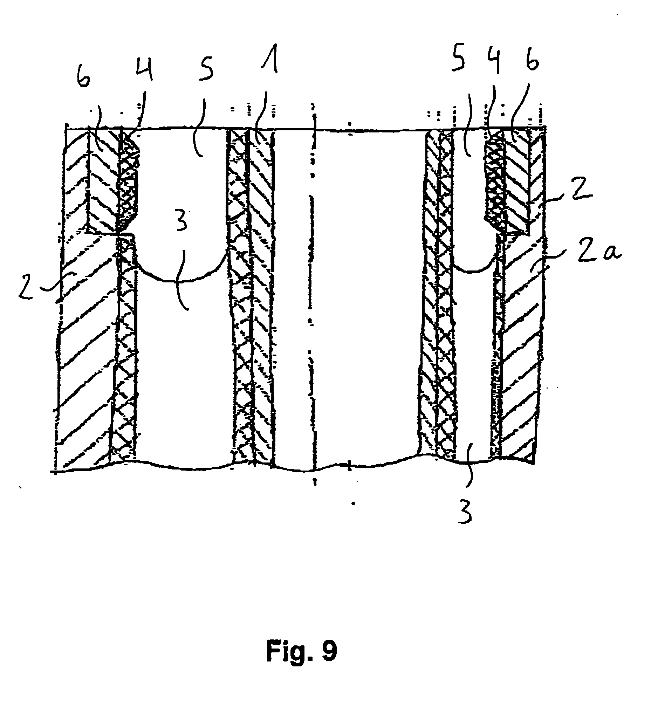

Fig. 9 zeigt eine Buchse mit exzentrischer Anordnung des Kemkörpers 1 relativ zum Hüllkörper 2. Diese Buchse weist in einer Radialrichtung einen größeren Freiweg auf als in einer anderen. Durch die Schaffung kleinerer Freiwege kann die Buchse an enge Bauraumsituationen angepasst werden. Die Buchse weist Einschubkörper 6 mit Anschlägen 4 auf, die in eine Außenhülse 2a des Hüllkörpers 2 eingefügt sind. Der Kemkörper 1 ist durch eine elastische Verbindungslage 3 mit dem mehrteiligen Hüllkörper 2 verbunden. Die Verbindungslage 3 weist Aussparungen 5 auf.

Die Anschläge 4 und die elastischen Verbindungslagen 3 in den hier beschriebenen Ausführungsbeispielen sind aus Elastomeren, insbesondere aus Gummi gefertigt. Die Außenhülse 2a, die Aufnahmehülse 8, die Einschubkörper 6, 7 und die Aufsteckkörper 11 sind mit den zuvor genannten Elastomeren durch Vulkanisation verbunden oder mit diesen verklebt. Dabei können die Anschläge 4 und die elastische Verbindungslage 3 aus unterschiedlichen Elastomeren bestehen, um der Buchse unterschiedliche Steifigkeitskennlinien aufzuprägen. Bei den Buchsen gemäß den Fig. 1 bis 9 können die elastischen Verbindungslagen 3 mit dem Kemkörper 1 und/ oder dem Hüllkörper 2 durch Vulkanisation verbunden sein. Alternativ ist auch eine kraftschlüssige erbindung des Kernkörpers 1, des Hüllkörpers 2 und der Verbindungslage 3 denkbar.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass die zuvor ausgewählten Ausführungsbeispiele lediglich zur Erörterung der erfindungsgemäßen Lehre dienen, diese jedoch nicht auf diese Ausführungsbeispiele einschränken.

## Patentansprüche

1. Buchse, umfassend einen Kernkörper (1), mindestens einen diesen umgebenden Hüllkörper (2) und mindestens eine elastische Verbindungslage (3), wobei die elastische Verbindungslage (3) den Hüllkörper (2) und den Kemkörper (1) miteinander verbindet und voneinander beabstandet, wobei der Kernkörper (1) und der Hüllkörper (2) relativ zueinander bewegbar sind, wobei dem Kernkörper (1) und/ oder dem Hüllkörper (2) mindestens ein baulich von der Verbindungslage (3) getrennter oder ein von der Verbindungslage (3) getrennt hergestellter Anschlag (4) zugeordnet ist, welcher deren relative Bewegung begrenzt, wobei die elastische Verbindungslage (3) Aussparungen (5) zur Aufnahme des Anschlags (4) aufweist und wobei die Aussparungen (5) eine relative Bewegung über eine freie Wegstrecke oder einen freien Winkel erlauben,
**dadurch gekennzeichnet, dass**
der Kemkörper (1) mehrteilig aufgebaut ist, wobei der Kernkörper (1) aus einer Aufnahmehülse (8) besteht, in welcher mindestens ein Einschubkörper (7) aufgenommen ist oder auf welcher mindestens ein Aufsteckkörper (11) angeordnet ist, wobei der Einschubkörper (7) oder der Aufsteckkörper (11) die Aufnahmehülse (8) an einem axialen Ende übergreift und stimseitig an dieser anliegt, oder wobei der Hüllkörper (2) mehrteilig aufgebaut ist, wobei der Hüllkörper (2) mindestens einen Aufsteckkörper (11) mit einem Anschlag (4) aufweist und wobei der Aufsteckkörper (11) eine Außenhülse (2a) an einem axialen Ende übergreift und stirnseitig an dieser anliegt.

2. Buchse nach Anspruch 1, **dadurch gekennzeichnet, dass** der Kernkörper (1) oder der Hüllkörper (2) über die freie Wegstrecke oder den freien Winkel gegen eine erste Rückstellkraft bewegbar ist.

3. Buchse nach Anspruch 1 oder 2, **dadurch gekennzeichnet, dass** der Kemkörper (1) oder der Hüllkörper (2) nach Anlage an dem Anschlag (4) über eine Bremsstrecke oder einen Bremswinkel gegen eine zweite Rückstellkraft bewegbar ist.

4. Buchse nach Anspruch 3, **dadurch gekennzeichnet, dass** der Anschlag (4) als elastischer Körper ausgebildet ist.

5. Buchse nach einem der Ansprüche 1 bis 4, **dadurch gekennzeichnet, dass** die elastische Verbindungslage (3) Ausnehmungen zur Modifizierung der radialen oder axialen Steifigkeit aufweist.

6. Buchse nach einem der Ansprüche 1 bis 5, **dadurch gekennzeichnet, dass** der Einschubkörper (7) einen Übergriff (9) aufweist, der an einem Öffnungsrand (10) der Aufnahmehülse (8) anliegt.

7. Buchse nach einem der Ansprüche 1 bis 6, **dadurch gekennzeichnet, dass** am Einschubkörper (7) der Anschlag (4) angeordnet ist.

8. Buchse nach einem der Ansprüche 1 bis 7, **dadurch gekennzeichnet, dass** der Aufsteckkörper (11) auf einem Absatz der Aufnahmehülse (8) angeordnet ist und den Anschlag (4) aufweist.

9. Buchse nach einem der Ansprüche 1 bis 8, **dadurch gekennzeichnet, dass** der Hüllkörper (2) mindestens einen Einschubkörper (6) mit dem Anschlag (4) aufweist.

10. Buchse nach einem der Ansprüche 1 bis 9, **dadurch gekennzeichnet, dass** der Kemkörper (1) exzentrisch zum Hüllkörper (2) angeordnet ist.

## Claims

1. Bushing comprising a core element (1), at least one sheath element (2) which surrounds the latter and at least one elastic connecting layer (3), wherein the elastic connecting layer (3) connects the sheath element (2) and the core element (1) to one another and spaces them apart from one another, wherein the core element (1) and the sheath element (2) can be moved relative to one another, wherein the core element (1) and/or the sheath element (2) are/is assigned at least one stop (4) which is structurally separate from the connecting layer (3) or one stop (4) which is manufactured separately from the connecting layer (3) and which limits the relative movement of said core element (1) and sheath element (2), wherein the elastic connecting layer (3) has recesses (5) for accommodating the stop (4), and wherein the recesses (5) permit relative movement over a free travel distance or a free angle,
**characterized in that**
the core element (1) is of multi-part construction, wherein the core element (1) is composed of a receptacle sleeve (8) in which at least one insertion element (7) is accommodated or on which at least one plug-on element (11) is arranged, wherein the insertion element (7) or the plug-on element (11) engages over the receptacle sleeve (8) at one axial end and bears against the latter at an end face or wherein the sheath element (2) is of multi-part construction, wherein the sheath element (2) has at least one plug-on element (11) with a stop (4), and wherein the plug-on element (11) engages over an outer sleeve (2a) at one axial end and bears against the latter at an end face.

2. Bushing according to Claim 1, **characterized in that** the core element (1) or the sheath element (2) can be moved over the free travel distance or the free angle counter to a first restoring force.

3. Bushing according to Claim 1 or 2, **characterized in that** the core element (1) or the sheath element (2) can be moved, after abutment against the stop (4), over a braking distance or a braking angle counter to a second restoring force.

4. Bushing according to Claim 3, **characterized in that** the stop (4) is embodied as an elastic element.

5. Bushing according to one of Claims 1 to 4, **characterized in that** the elastic connecting layer (3) has recesses for modifying the radial or axial rigidity.

6. Bushing according to one of Claims 1 to 5, **characterized in that** the insertion element (7) has a step (9) which bears against an opening edge (10) of the receptacle sleeve (8).

7. Bushing according to one of Claims 1 to 6, **characterized in that** the stop (4) is arranged on the insertion element (7).

8. Bushing according to one of Claims 1 to 7, **characterized in that** the plug-on element (11) is arranged on a shoulder of the receptacle sleeve (8) and has the stop (4).

9. Bushing according to one of Claims 1 to 8, **characterized in that** the sheath element (2) has at least one insertion element (6) with the stop (4).

10. Bushing according to one of Claims 1 to 9, **characterized in that** the core element (1) is arranged eccentrically with respect to the sheath element (2).

## Revendications

1. Manchon, comprenant un corps de noyau (1), au moins un corps d'enveloppe (2) entourant celui-ci, et au moins une couche de liaison élastique (3), la couche de liaison élastique (3) reliant ensemble le corps d'enveloppe (2) et le corps de noyau (1) et les séparant l'un de l'autre, le corps de noyau (1) et le corps d'enveloppe (2) pouvant être déplacés l'un par rapport à l'autre, au moins une butée (4) séparée constructivement de la couche de liaison (3) ou établie séparément de la couche de liaison (3) étant associée au corps de noyau (1) et/ou au corps d'enveloppe (2), laquelle butée limite le déplacement relatif de ceux-ci, la couche de liaison élastique (3) présentant des évidements (5) pour recevoir la butée (4) et les évidements (5) permettant un déplacement relatif sur une course libre ou sur un angle libre,
**caractérisé en ce que**
le corps de noyau (1) est réalisé en plusieurs parties, le corps de noyau (1) se composant d'une douille de réception (8) dans laquelle au moins un corps d'insertion (7) est reçu ou sur laquelle au moins un corps d'enfichage (11) est disposé, le corps d'insertion (7) ou le corps d'enfichage (11) venant en prise par le dessus de la douille de réception (8) au niveau d'une extrémité axiale et s'appliquant du côté frontal contre celle-ci, ou
le corps d'enveloppe (2) étant réalisé en plusieurs parties, le corps d'enveloppe (2) présentant au moins un corps d'enfichage (11) avec une butée (4) et le corps d'enfichage (11) venant en prise par le dessus avec une douille extérieure (2a) au niveau d'une extrémité axiale et s'appliquant du côté frontal contre celle-ci.

2. Manchon selon la revendication 1, **caractérisé en ce que** le corps de noyau (1) ou le corps d'enveloppe (2) peut être déplacé sur la course libre ou sur l'angle libre à l'encontre d'une première force de rappel.

3. Manchon selon la revendication 1 ou 2, **caractérisé en ce que** le corps de noyau (1) ou le corps d'enveloppe (2) peut être déplacé après être venu en contact avec la butée (4) sur une course de freinage ou un angle de freinage à l'encontre d'une deuxième force de rappel.

4. Manchon selon la revendication 3, **caractérisé en ce que** la butée (4) est réalisée sous forme de corps élastique.

5. Manchon selon l'une quelconque des revendications 1 à 4, **caractérisé en ce que** la couche de liaison élastique (3) présente des évidements pour modifier la rigidité radiale ou axiale.

6. Manchon selon l'une quelconque, des revendications 1 à 5, **caractérisé en ce que** le corps d'insertion (7) présente un élément d'engagement par le dessus (9) qui s'applique sur un bord d'ouverture (10) de la douille de réception (8).

7. Manchon selon l'une quelconque des revendications 1 à 6, **caractérisé en ce que** la butée (4) est disposée au niveau du corps d'insertion (7).

8. Manchon selon l'une quelconque des revendications 1 à 7, **caractérisé en ce que** le corps d'enfichage (11) est disposé sur un épaulement de la douille de réception (8) et présente la butée (4).

9. Manchon selon l'une quelconque des revendications 1 à 8, **caractérisé en ce que** le corps d'enveloppe (2) présente au moins un corps d'insertion (6) avec la butée (4).

10. Manchon selon l'une quelconque des revendications 1 à 9, **caractérisé en ce que** le corps de noyau (1) est disposé en position excentrique par rapport au corps d'enveloppe (2).
